# EUROPEAN PATENT SPECIFICATION

(11) **EP 3 224 762 B1**
(45) Date of publication and mention of the grant of the patent: **13.01.2021**
(21) Application number: 14805883.7
(22) Date of filing: 28.11.2014
(51) Int. Cl.: G06K 9/00, G06K 9/32, G09B 17/04

(54) **METHOD AND SYSTEM FOR DISPLAYING RECOGNIZED TEXT ACCORDING TO A SPEED READING PATTERN**
VERFAHREN UND SYSTEM ZUR ANZEIGE ERKANNTEN TEXT NACH EINEM SCHNELLEN LESESCHEMA
PROCÉDÉ ET SYSTÈME D'AFFICHAGE DE TEXTE RECONNU SELON UN SCHÉMA DE LECTURE À VITESSE

(43) Date of publication of application: 04.10.2017
(73) Proprietor: Hewlett-Packard Development Company, L.P., Spring TX 77389 (US)
(72) Inventor: PLOWMAN, Thomas, Cambridge Cambridgeshire CB4 0WZ (GB); BACIOIU, Daniel-Vasile, Cambridge Cambridgeshire CB40WZ (GB)
(74) Representative: Liesegang, Eva
(86) International application number: PCT/EP2014/075997
(87) International publication number: WO 2016/082895

(56) References cited:
- US-A- 6 154 757
- US-A1- 2011 010 611
- US-A1- 2012 054 672
- US-A1- 2012 088 543
- US-A1- 2013 027 302

## Description

### BACKGROUND

Augmented reality refers to a technology platform that merges the physical and virtual worlds by augmenting real-world physical objects with virtual objects. For example, a real-world physical newspaper may be out of date the moment it is printed, but an augmented reality system may be used to recognize an article in the newspaper and to provide up-to-date virtual content related to the article. While the newspaper generally represents a static text and image-based communication medium, the virtual content need not be limited to the same medium. Indeed, in some augmented reality scenarios, the newspaper article may be augmented with audio and/or video-based content that provides the user with more meaningful information.
US 2012/088543 A1 describes displaying text in augmented reality in a low-light environment. The contrast of an image containing text is increased against the background by adjusting the brightness and contrast settings. Optical character recognition is performed to generate a computer readable text, which is then displayed on a mobile device overlaying the original image.
US 2011/010611 A1 describes displaying a text on an electronic media reader. A word or a group of words is magnified and displayed in a subsequent manner overlaying the displayed text page. The user may define the rate at which the magnified set of words moves across and down the page.
US 6,154,757 A describes an enhanced user interface for assigning values to parameters associated with the display of text, and for displaying the electronic text in accordance with the parameter values selected. The user's personal characteristics, preferences, and abilities, as well as the characteristics of the text are taken into account for optimizing the reading process.
US 2012/054672 A1 describes a speed reading method for an electronic media reader accessing a reading material comprising a text. A number of lines is determined and presented within a windowed area within a graphical user interface. The area and text outside of the windowed area is grayed, shaded or partially obscured.

Some augmented reality systems operate on mobile devices, such as smart glasses, smartphones, or tablets. In such systems, the mobile device may display its camera feed, e.g., on a touchscreen display of the device, augmented by virtual objects that are superimposed in the camera feed to provide an augmented reality experience or environment. In the newspaper example above, a user may point the mobile device camera at the article in the newspaper, and the mobile device may show the camera feed (i.e., the current view of the camera, which includes the article) augmented with a video or other virtual content, e.g., in place of a static image in the article. This creates the illusion of additional or different objects than are actually present in reality. The features of the invention are defined in independent claims. Additional features of particular embodiments of the invention are defined in the dependent claims.

### BRIEF DESCRIPTION OF THE DRAWINGS

The following detailed description references the drawings, wherein:
FIG. 1 is a block diagram of an example computing device to provide augmented reality speed reading;
FIG. 2 is a block diagram of an example system to provide augmented reality speed reading in a first device; and
FIG. 3 is a flowchart of an example method for providing a speed reading pattern in an augmented reality environment.

### DETAILED DESCRIPTION

A "computing device" or "device" may be a desktop computer, laptop (or notebook) computer, workstation, tablet computer, mobile phone, smart phone, smart device, smart glasses, or any other processing device or equipment which may be used to provide an augmented reality experience.

Speed reading techniques may improve reading speed of a user. Some speed reading techniques are implemented on a computing device. Computing devices implementing augmented reality may provide a mechanism by which to implement speed reading techniques. In some examples, wearable augmented reality devices may allow a user to interact with traditional printed media, such as, newspapers, books, magazines, pamphlets, flyers, etc. and implement a speed reading technique on the device. However, implementing speed reading techniques via a computing device in an augmented reality experience may interfere with the display of other physical and virtual objects in the augmented reality experience.

To address these issues, in the examples described herein, and according to the invention as defined in the independent claims, a display of a speed reading pattern on a computing device in an augmented reality mode will provide an augmented reality experience in which speed reading techniques are implemented without limiting the display of other physical and virtual objects. In such examples, the computing device will display recognized text data as pop-ups via dedicated portions of the display. The computing device may provide indicators to a user that the display of recognized text has ended and may indicate additional images are required to continue use of the speed reading pattern.

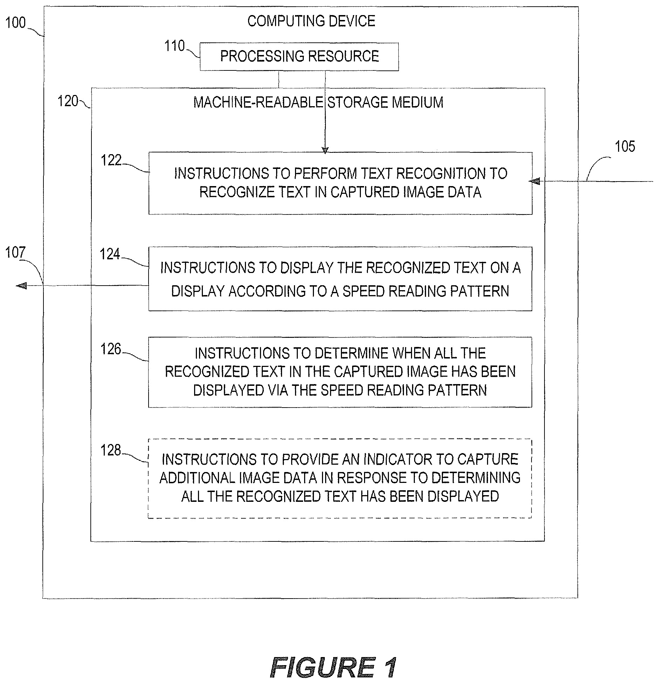

Referring now to the drawings, FIG. 1 is a block diagram of an example computing device 100 to provide augmented reality speed reading. In the example of FIG. 1, computing device 100 includes a processing resource 110 and a machine readable storage medium 120 comprising (e.g., encoded with) instructions 122, 124, 126, and 128 executable by processing resource 110. In some examples, storage medium 120 may include additional instructions. In some examples, instructions 122, 124, 126, and 128, and any other instructions described herein in relation to storage medium 120, may be stored on a machine-readable storage medium remote from but accessible to computing device 100 and processing resource 110 (e.g., via a computer network). In some examples, instructions 122, 124, 126, and 128 may be instructions of a computer program, computer application (app), agent, or the like, of computing device 100. In other examples, the functionalities described herein in relation to instructions 122, 124, 126, and 128 may be implemented as engines comprising any combination of hardware and programming to implement the functionalities of the engines, as described below.

In examples described herein, a processing resource may include, for example, one processor or multiple processors included in a single computing device (as shown in FIG. 1) or distributed across multiple computing devices. A "processor" may be at least one of a central processing unit (CPU), a semiconductor-based microprocessor, a graphics processing unit (GPU), a field-programmable gate array (FPGA) to retrieve and execute instructions, other electronic circuitry suitable for the retrieval and execution of instructions stored on a machine-readable storage medium, or a combination thereof. Processing resource 110 may fetch, decode, and execute instructions stored on storage medium 120 to perform the functionalities described below. In other examples, the functionalities of any of the instructions of storage medium 120 may be implemented in the form of electronic circuitry, in the form of executable instructions encoded on a machine-readable storage medium, or a combination thereof.

As used herein, a "machine-readable storage medium" may be any electronic, magnetic, optical, or other physical storage apparatus to contain or store information such as executable instructions, data, and the like. For example, any machine-readable storage medium described herein may be any of Random Access Memory (RAM), volatile memory, non-volatile memory, flash memory, a storage drive (e.g., a hard drive), a solid state drive, any type of storage disc (e.g., a compact disc, a DVD, etc.), and the like, or a combination thereof. Further, any machine-readable storage medium described herein may be non-transitory.

In the example of FIG. 1, instructions 122 may perform text recognition of a captured image data 105. Computing device 100 may passively acquire (i.e., receive) or actively acquire (e.g., retrieve) in computing device 100 captured image data 105 from an image capturing device. In such example, the computing device 100 may acquire the captured imaging device 105 from an image capturing device either coupled to computing device 100 directly (e.g., wired) or indirectly (e.g., wirelessly). The image capturing device may be a camera or video recording device to capture images of physical objects, for example, in an augmented reality device. In the example of FIG. 1, computing device 100 may be a computing device to provide an augmented reality experience, such as, a smartphone, a mobile phone, a tablet computer, a smart glass, a helmet mounted display, a heads-up display, etc. In other examples, computing device 100 may be coupled to a computing device to provide an augmented reality experience.

As used herein, "text recognition" may refer to a process of identifying text data in an image file and may include translating identified text from one language to another language. In the examples described herein, the computing device 100 may perform text recognition via programming instructions executed by processing resource 110 to analyze an image and recognize text data and translate a foreign language text with the recognized text data. For example, an optical character recognition (OCR) system may be used by computing device 100 to recognize text and a separate text translation technique may be applied to the recognized text to translate recognized text in computing device 100. However, the examples are not limited thereto, and computing device 100 may recognize text by various computer vision techniques to identify words and characters in captured image data 105 and may cluster text in the captured images into groups by media items to which the text is determined to belong. For example, a captured image may include images of more than one physical object including text, such as, an image including a street sign and magazine cover. In such an example, computing device 100 may detect parallelograms in the captured image to identify a physical object which may include text therein, for example, a parallelogram may correspond to a street sign or a book. Computing device 100 may use clustering techniques in two dimensional space to group aggregates of recognized text that may be part of the same parallelogram. In such examples, computing device 100 may also apply various techniques to determine an orientation of the captured text as part of text recognition. In other examples, computing device 100 may use various other techniques to determine a location of text in a captured image, such as, Bayesian techniques, etc., and then recognize text in the determined locations.

In instructions 124, the computing device 100 may display a recognized text 107 on a display according to a speed reading pattern. As used herein "speed reading pattern" refers to a technique implemented on a display device to attempt to improve a user's speed of reading. Examples include at least one of enlarging certain text on the display, blurring portions of the text on the display, rearranging an order of text on the display, etc. For example, a speed reading pattern will include presenting certain words from recognized text serially in a defined region on the display or by greying out, partially obscuring or shading all but certain words on the display sequentially to aide in speed reading those portions of the text. However, the examples are not limited thereto and any speed reading pattern may be implemented on the display. The display may be any display device coupled to computing device 100 directly (e.g., wired) or indirectly (e.g., wirelessly). The display may be a device coupled to computing device 100 through a wired connection (e.g., local area network (LAN), etc.) or a wireless connection (e.g., wireless local area network (WLAN), Wi-Fi, Bluetooth, etc.). For example, the display may be a display of an augmented reality device such as Google® Glasses, smartphones, mobile phones, tablets, phablets, head mounted display, etc.

In some examples, computing device 100 may display recognized text 107 contemporaneously with the captured image to provide an augmented reality experience to a user. For example, the speed reading pattern will display a digital rendering of recognized text 107 or a copy of recognized text 107 in a pop-up above the captured image of recognized text 107 and as the user reads recognized text 107, the pop-up will travel to a location over the portion of recognized text 107 being displayed in the pop-up as the user progresses through reading recognized text 107. In another example, recognized text 107 may be displayed in a separate graphical user interface (GUI) to be displayed in a certain position on the display. In such a manner, the captured image data 105 may be augmented to provide a speed reading pattern to user of computing device 100. A user may control and/or manipulate the display of the augmented captured image via any input device, such as, a keyboard, a mouse, a GUI, a motion detection sensor, gaze detection sensors, etc. to interact with the augmented reality environment provided by computing device 100.

In instructions 126, computing device 100 may determine when recognized text 107 in the captured image data 105 has been displayed via the speed reading pattern. For example, computing device 100 will determine recognized text 107 in captured image data 105 has been displayed for speed reading by analyzing the text displayed via the speed reading pattern by tracking a user's gaze movement to determine a user's progress in reading recognized text 107. In some examples, recognized text 107 displayed via the speed reading pattern may include links to additional information about recognized text 107. For example, the additional information may include video data, image data, and text data. In such a manner, the speed reading pattern may incorporate other augmented reality data and characteristics.

In some examples, in instructions 128, computing device 100 may provide an indicator to capture additional image data in response to determining recognized text 107 in captured image data 105 has been displayed. For example, in the example of speeding reading a book, computing device 100 may provide a pop-up with instructions to a user to turn a page of the book in response to determining that all of recognized text 107 of captured image data 105 of the current page of the book has been displayed for a user. In other examples, the indicators may include providing a virtual animation on the display, such as, an arrow symbol, etc., changing a color of the displayed captured image, etc. or an auditory signal, such as, a bell, an alarm, a charm, etc. In the examples, a speed reading pattern may be implemented in computing device 100 via an augmented reality experience without distracting from other objects displayed on computing device 100.

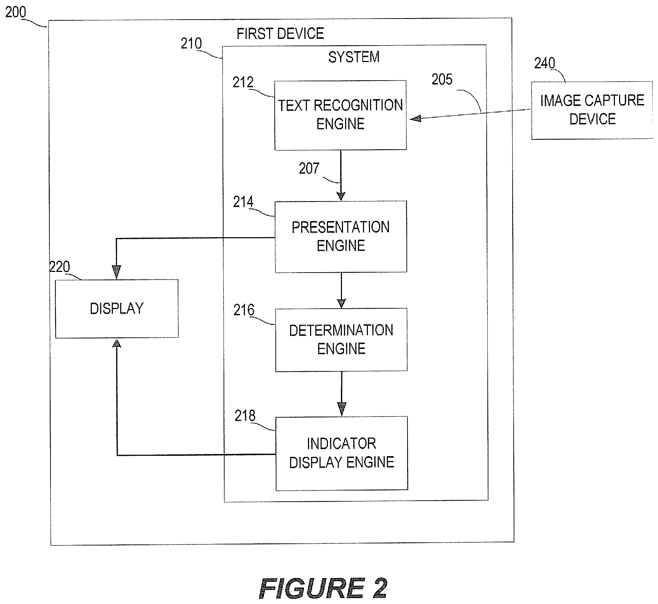

In some examples, instructions 122, 124, 126, and 128 may be part of an installation package that, when installed, may be executed by processing resource 110 to implement the functionalities described herein in relation to instructions 122, 124, 126, and 128. In such examples, storage medium 120 may be a portable medium, such as a CD, DVD, flash drive, or a memory maintained by a computing device from which the installation package can be downloaded and installed. In other examples, instructions 122, 124, 126, and 128 may be part of an application, applications, or component already installed on computing device 100 including processing resource 110. In such examples, the storage medium 120 may include memory such as a hard drive, solid state drive, or the like. In some examples, functionalities described herein in relation to FIG. 1 may be provided in combination with functionalities described herein in relation to any of FIGS. 2-3.

FIG. 2 is a block diagram of an example system 210 to provide augmented reality speed reading in a first device 200. In the example of FIG. 2, system 210 includes at least engines 212, 214, 216, and 218, which may be any combination of hardware and programming to implement the functionalities of the engines. In examples described herein, such combinations of hardware and programming may be implemented in a number of different ways. For example, the programming for the engines may be processor executable instructions stored on a non-transitory machine-readable storage medium and the hardware for the engines may include a processing resource to execute those instructions. In such examples, the machine-readable storage medium may store instructions that, when executed by the processing resource, implement engines 212, 214, 216, and 218. In such examples, system 210 may include the machine-readable storage medium storing the instructions and the processing resource to execute the instructions, or the machine-readable storage medium may be separate but accessible to system 210 and the processing resource.

In some examples, the instructions can be part of an installation package that, when installed, can be executed by the processing resource to implement at least engines 212, 214, 216, and 218. In such examples, the machine-readable storage medium may be a portable medium, such as a CD, DVD, or flash drive, or a memory maintained by a computing device from which the installation package can be downloaded and installed. In other examples, the instructions may be part of an application, applications, or component already installed on system 210 including the processing resource. In such examples, the machine-readable storage medium may include memory such as a hard drive, solid state drive, or the like. In other examples, the functionalities of any engines of system 210 may be implemented in the form of electronic circuitry.

In the example of FIG. 2, text recognition engine 212 may recognize text 207 and associated images in captured image data 205 of a physical media passively acquired or actively acquired from image capture device 240. In the example of FIG. 2, first device 200 may be a computing device to provide an augmented reality experience, such as, a smartphone, a mobile phone, a tablet computer, a smart glass, a helmet mounted display, a heads-up display, etc. Text recognition engine 212 may include instructions to recognize text 207 and images associated with the text in captured image data 205 and provide the recognized text 207 to presentation engine 214. For example, text recognition engine 212 may include instructions to perform OCR on captured image 205 to determine recognized text 207.

In some examples, presentation engine 214 may display recognized text 207 on display 220 according to a speed reading pattern. In some examples, speed reading patterns may include one of the text recognition patterns discussed above with respect to FIG. 1. Display 220 may be a display of device 200 used to provide an augmented reality experience to a user, as discussed above with respect to FIG. 1.

Determination engine 216 may determine when recognized text 207 in the captured image has been displayed via the speed reading pattern on display 220. In some examples, determination engine may determine recognized text 207 has been displayed on display 220 by comparing the selected text displayed by presentation engine 214 with recognized text 207 determined by text recognition engine 212. In such an example, determination engine 216 may track and compare the small portion of text displayed in a GUI associated with presentation engine 214 and may determine when all or substantially all of recognized text 207 identified by text recognition engine 212 has been displayed via the speed reading pattern.

Indicator display engine 218 may display an indicator on display 220 to capture additional image data in response to determining that recognized text 207 in captured image data 205 has been displayed. In some examples, the indicator may be a visual indicator provided to a user on display 220 via a virtual object superimposed on the captured image, such as, a pop-up, a symbol, such as, an arrow, a change in background color of the displayed capture device, etc. In other examples, the indicator may be an auditory signal, such as, a bell, a chime, an alarm, etc., to indicate recognized text 207 has been displayed via presentation engine 214. In such a manner, a user of first device 200 may determine when all or substantially all of recognized text 207 has been displayed. In the example of FIG. 2, captured image data 205 may be an image of a multi-paged physical media, such as a book, magazine, newspaper, etc., and the indicator may be a way of providing instructions to a user to turn to the next page of the physical media. In such a manner, a user may utilize first device 200 to experience the benefits of a speed reading pattern within the area of display 220 of first device 200 as the intended physical text so as to not distract from other elements in the field of view of the augmented reality experience provided via display 220.

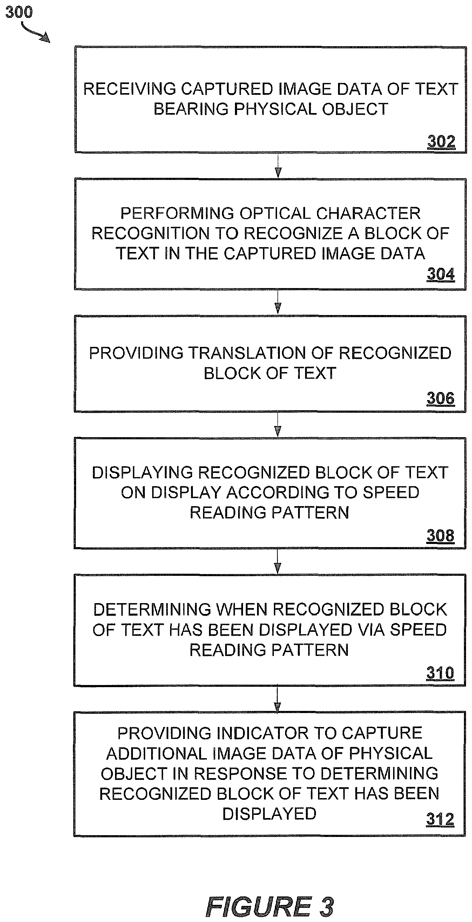

FIG. 3 is a flowchart of an example method 300 for providing a speed reading pattern in an augmented reality environment. Although execution of method 300 is described below with reference to computing device 100 described above, other suitable systems (first device 200) for the execution of method 300 can be utilized. Additionally, implementation of method 300 is not limited to such examples.

At 302 of method 300, computing device 100 may receive captured image data of a text-bearing physical object. In the example of FIG. 3, the physical object may be multi-paged physical media, such as, a book, a newspaper, a magazine, a pamphlet, etc.

At 304, computing device 100 may perform optical character recognition to recognize a block of text in the captured image data.

At 306, computing device 100 may provide a translation of the recognized block of text. In the example of FIG. 3, the block of text may include a few words in a foreign language and computing device 100 may translate those words into the main language of the text and provide such translation to the computing device 100.

At 308, computing device 100 may display the recognized block of text on a display according to a speed reading pattern. In the example of FIG. 3, the displayed block of text may include the translated words provided at 306. For example, the translated words may be displayed in place of the original words as part of the speed reading pattern.

At 310, computing device 100 may determine when the recognized block of text has been displayed via the speed reading pattern. Computing device 100 may determine the recognized block of text has been displayed via the speed reading pattern as discussed above with reference to FIGs. 1-2.

At 312, computing device 100 may provide an indicator to capture additional image data of the physical object in response to determining the recognized block of text has been displayed.

Although the flowchart of FIG. 3 shows a specific order of performance of certain functionalities, method 300 is not limited to that order. For example, the functionalities shown in succession in the flowchart may be performed in a different order, may be executed concurrently or with partial concurrence, or a combination thereof. In some examples, functionalities described herein in relation to FIG. 3 may be provided in combination with functionalities described herein in relation to any of FIGS. 1-2.

## Claims

1. A non-transitory machine-readable storage medium (120) comprising instructions executable by a processing resource (110) to:
perform (122) text recognition to recognize text (107) in captured image data (105);
**characterized in** to display (124) the recognized text (107) on a display (220) according to a speed reading pattern, wherein the speed reading pattern displays a digital rendering of recognized text (107) in a pop-up above the captured image of the recognized text (107), wherein the pop-up travels to a location over the portion of the recognized text (107) being displayed in the pop-up as a user reads the recognized text (107) and progresses through the reading recognized text (107); and
determine (126) when the recognized text (107) in the captured image (105) has been displayed by tracking the user's gaze movement to determine the user's progress in reading the recognized text (107),
wherein the speed reading pattern includes at least one of:
- presenting certain words from the recognized text (107) serially in a defined region on the display (220);
- greying out all but certain words of the recognized text (107) on the display (220) sequentially;
- partially obscuring all but certain words of the recognized text (107) on the display (220) sequentially; and
- shading all but certain words of the recognized text (107) on the display (220) sequentially.

2. The storage medium of claim 1, wherein the captured camera data (105) includes a multi-paged physical text including at least one of a newspaper, a book, a magazine, flyers, and pamphlets.

3. The storage medium of claim 1, further comprising instructions to provide (126) an indicator to capture additional image data in response to determining the recognized text (107) has been displayed wherein the additional image data includes an image of an additional page of the text.

4. The storage medium of claim 1, wherein text recognition includes to perform optical character recognition and translate the recognized text (107) into a certain language.

5. The storage medium of claim 1, wherein the speed reading pattern includes at least one of enlarging certain text on the display (220); blurring portions of the text on the display (220); rearranging an order of text on the display (220).

6. The storage medium of claim 1, wherein the display (220) is at least one of a smartphone, a mobile phone, a tablet computer, smart glasses, and a helmet mounted display.

7. A system (200), comprising:
a text recognition engine (212) to recognize text in captured image data (105) of a physical media; **characterized by** further comprising
a presentation engine (214) to display the recognized text (107) according to a speed reading pattern on a display (220), wherein the speed reading pattern displays a digital rendering of recognized text (107) in a pop-up above the captured image of the recognized text (107), wherein the pop-up travels to a location over the portion of the recognized text (107) being displayed in the pop-up as a user reads the recognized text (107) and progresses through reading the recognized text (107);
a determination engine (216) to determine when the recognized text (107) in the captured image data (105) has been displayed by tracking the user's gaze movement to determine the user's progress in reading the recognized text (107); and
a indicator display engine (218) to display an indicator to capture additional image data in response to determining the recognized text (107) has been displayed,
wherein the physical media is a multi-paged physical media,
wherein the speed reading pattern includes at least one of:
- presenting certain words from the recognized text (107) serially in a defined region on the display (220);
- greying out all but certain words of the recognized text (107) on the display (220) sequentially;
- partially obscuring all but certain words of the recognized text (107) on the display (220) sequentially; and
- shading all but certain words of the recognized text (107) on the display (220) sequentially.

8. The system of claim 7, wherein the speed reading pattern includes at least one of enlarging certain text on the display (220); blurring portions of the text; rearranging an order of text in the recognized text (107) to be displayed on the display (220).

9. The system of claim 7, wherein the physical media includes at least one of a newspaper, a book, a magazine, flyers, and pamphlets.

10. The system of claim 7, wherein the display (220) is at least one of smartphone, mobile phone, tablet computer, smart glasses, helmet mounted display, and heads-up display.

11. A method (300) for providing a speed reading pattern in an augmented reality environment, comprising:
receiving (302) captured image data (105) of a text bearing physical object;
performing (304) optical character recognition to recognize a block of text in the captured image data (105); **characterized in**
providing (306) a translation of the recognized block of text;
displaying (308) the recognized block of text on a display (220) according to a speed reading pattern, wherein the speed reading pattern displays a digital rendering of recognized text (107) in a pop-up above the captured image of the recognized text (107), wherein the pop-up travels to a location over the portion of the recognized text (107) being displayed in the pop-up as a user reads the recognized text (107) and progresses through reading the recognized text (107);
determining (310) when the recognized block of text has been displayed by tracking the user's gaze movement to determine the user's progress in reading the recognized text (107); and
providing (312) an indicator to capture additional image data of the text bearing physical object in response to determining (310) the recognized block of text has been displayed,
wherein the speed reading pattern includes at least one of:
- presenting certain words from the recognized text (107) serially in a defined region on the display (220);
- greying out all but certain words of the recognized text (107) on the display (220) sequentially;
- partially obscuring all but certain words of the recognized text (107) on the display (220) sequentially; and
- shading all but certain words of the recognized text (107) on the display (220) sequentially.

12. The method of claim 11, wherein the additional image data of the text bearing physical object includes links to additional information about the recognized text (107).

13. The method of claim 12, wherein the additional information includes video data, image data, and text data.

## Patentansprüche

1. Nichtflüchtiges maschinenlesbares Speichermedium (120), das Anweisungen umfasst, die durch eine Verarbeitungsressource (110) zu Folgendem ausgeführt werden können:
Durchführen (122) einer Texterkennung, um Text (107) in erfassten Bilddaten (105) zu erkennen;
durch Folgendes gekennzeichnet:
Anzeigen (124) des erkannten Textes (107) auf einer Anzeige (220) gemäß einem Schnelllesemuster, wobei das Schnelllesemuster ein digitales Rendering des erkannten Textes (107) in einem Pop-Up über dem erfassten Bild des erkannten Textes (107) anzeigt, wobei das Pop-Up sich an eine Stelle über dem Abschnitt des erkannten Textes (107) bewegt, der in dem Pop-Up angezeigt wird, während ein Benutzer den erkannten Text (107) liest und beim Lesen des erkannten Textes (107) vorankommt; und
Feststellen (126), wenn der erkannte Text (107) in dem erfassten Bild (105) angezeigt wurde, durch Verfolgen einer Blickbewegung des Benutzers, um das Vorankommen des Benutzers beim Lesen des erkannten Textes (107) festzustellen,
wobei das Schnelllesemuster Folgendes einschließt:
- serienmäßiges Präsentieren bestimmter Wörter aus dem erkannten Text (107) in einer definierten Region auf der Anzeige (220);
- fortlaufendes Ausgrauen aller, bis auf bestimmte, Wörter des erkannten Textes (107) auf der Anzeige (220);
- fortlaufendes, teilweises Verdecken aller, bis auf bestimmte, Wörter des erkannten Textes (107) auf der Anzeige (220); und/oder
- fortlaufendes Schattieren aller, bis auf bestimmte, Wörter des erkannten Textes (107) auf der Anzeige (220).

2. Speichermedium nach Anspruch 1, wobei die erfassten Kameradaten (105) einen mehrseitigen physischen Text einschließen, der eine Zeitung, ein Buch, ein Magazin, Flugblätter und/oder Broschüren einschließt.

3. Speichermedium nach Anspruch 1, das ferner Anweisungen umfasst, ein Kennzeichen bereitzustellen (126), um zusätzliche Bilddaten als Reaktion auf das Feststellen, dass der erkannte Text (107) angezeigt wurde, zu erfassen, wobei die zusätzlichen Bilddaten ein Bild einer zusätzlichen Seite des Textes einschließen.

4. Speichermedium nach Anspruch 1, wobei die Texterkennung ein Durchführen einer optischen Zeichenerkennung und ein Übersetzen des erkannten Textes (107) in eine bestimmte Sprache einschließt.

5. Speichermedium nach Anspruch 1, wobei das Schnelllesemuster Folgendes einschließt: Vergrößern eines bestimmten Textes auf der Anzeige (220); Weichzeichnen von Abschnitten des Textes auf der Anzeige (220); und/oder Neuanordnen einer Textreihenfolge auf der Anzeige (220).

6. Speichermedium nach Anspruch 1, wobei die Anzeige (220) ein Smartphone, ein Mobiltelefon, ein Tablet-Computer, eine Datenbrille und/oder eine helmintegrierte Anzeige ist.

7. System (200), das Folgendes umfasst:
eine Texterkennungsmaschine (212), um Text in erfassten Bilddaten (105) eines physischen Mediums zu erkennen; **dadurch gekennzeichnet, dass** sie ferner Folgendes umfasst:
eine Präsentationsmaschine (214), um den erkannten Text (107) gemäß einem Schnelllesemuster auf einer Anzeige (220) anzuzeigen, wobei das Schnelllesemuster ein digitales Rendering des erkannten Textes (107) in einem Pop-Up über dem erfassten Bild des erkannten Textes (107) anzeigt, wobei das Pop-Up sich an eine Stelle über dem Abschnitt des erkannten Textes (107) bewegt, der in dem Pop-Up angezeigt wird, während ein Benutzer den erkannten Text (107) liest und beim Lesen des erkannten Textes (107) vorankommt;
eine Feststellungsmaschine (216), um festzustellen, wenn der erkannte Text (107) in den erfassten Bilddaten (105) angezeigt wurde, durch Verfolgen der Blickbewegung des Benutzers, um das Vorankommen des Benutzers beim Lesen des erkannten Textes (107) festzustellen; und
eine Kennzeichenanzeigemaschine (218), um ein Kennzeichen anzuzeigen, um zusätzliche Bilddaten als Reaktion auf das Feststellen, dass der erkannte Text (107) angezeigt wurde, zu erfassen,
wobei das physische Medium ein mehrseitiges physisches Medium ist,
wobei das Schnelllesemuster Folgendes einschließt:
- serienmäßiges Präsentieren bestimmter Wörter aus dem erkannten Text (107) in einer definierten Region auf der Anzeige (220);
- fortlaufendes Ausgrauen aller, bis auf bestimmte, Wörter des erkannten Textes (107) auf der Anzeige (220);
- fortlaufendes, teilweises Verdecken aller, bis auf bestimmte, Wörter des erkannten Textes (107) auf der Anzeige (220); und/oder
- fortlaufendes Schattieren aller, bis auf bestimmte, Wörter des erkannten Textes (107) auf der Anzeige (220).

8. System nach Anspruch 7, wobei das Schnelllesemuster Folgendes einschließt: Vergrößern eines bestimmten Textes auf der Anzeige (220); Weichzeichnen von Abschnitten des Textes; und/oder Neuanordnen einer Textreihenfolge in dem erkannten Text (107), der auf der Anzeige (220) angezeigt werden soll.

9. System nach Anspruch 7, wobei das physische Medium eine Zeitung, ein Buch, ein Magazin, Flugblätter und/oder Broschüren einschließt.

10. System nach Anspruch 7, wobei die Anzeige (220) ein Smartphone, Mobiltelefon, Tablet-Computer, eine Datenbrille, helmintegrierte Anzeige und/oder Heads-Up-Anzeige ist.

11. Verfahren (300) zum Bereitstellen eines Schnelllesemusters in einer Umgebung einer erweiterten Realität, das Folgendes umfasst:
Empfangen (302) erfasster Bilddaten (105) eines Textes, der ein physisches Objekt trägt;
Durchführen (304) einer optischen Zeichenerkennung, um einen Textblock in den erfassten Bilddaten (105) zu erkennen; durch Folgendes gekennzeichnet:
Bereitstellen (306) einer Übersetzung des erkannten Textblocks;
Anzeigen (308) des erkannten Textblockes auf einer Anzeige (220) gemäß einem Schnelllesemuster, wobei das Schnelllesemuster ein digitales Rendering des erkannten Textes (107) in einem Pop-Up über dem erfassten Bild des erkannten Textes (107) anzeigt, wobei das Pop-Up sich an eine Stelle über dem Abschnitt des erkannten Textes (107) bewegt, der in dem Pop-Up angezeigt wird, während ein Benutzer den erkannten Text (107) liest und beim Lesen des erkannten Textes (107) vorankommt;
Feststellen (310), wenn der erkannte Textblock angezeigt wurde, durch Verfolgen einer Blickbewegung des Benutzers, um den Fortschritt des Benutzers beim Lesen des erkannten Textes (107) festzustellen; und
Bereitstellen (312) eines Kennzeichens, um zusätzliche Bilddaten des Textes, der das physische Objekt trägt, zu erfassen, als Reaktion auf das Feststellen (310), dass der erkannte Textblock angezeigt wurde,
wobei das Schnelllesemuster Folgendes einschließt:
- serienmäßiges Präsentieren bestimmter Wörter aus dem erkannten Text (107) in einer definierten Region auf der Anzeige (220);
- fortlaufendes Ausgrauen aller, bis auf bestimmte, Wörter des erkannten Textes (107) auf der Anzeige (220);
- fortlaufendes, teilweises Verdecken aller, bis auf bestimmte, Wörter des erkannten Textes (107) auf der Anzeige (220); und/oder
- fortlaufendes Schattieren aller, bis auf bestimmte, Wörter des erkannten Textes (107) auf der Anzeige (220).

12. Verfahren nach Anspruch 11, wobei die zusätzlichen Bilddaten des Textes, der das physische Objekt trägt, Links zu zusätzlichen Informationen über den erkannten Text (107) einschließen.

13. Verfahren nach Anspruch 12, wobei die zusätzlichen Informationen Videodaten, Bilddaten und Textdaten einschließen.

## Revendications

1. Support de stockage lisible par machine non transitoire (120) comprenant des instructions exécutables par une ressource de traitement (110) pour :
effectuer (122) une reconnaissance de texte pour reconnaître du texte (107) dans les données d'image capturées (105) ;
caractérisé pour
afficher (124) le texte reconnu (107) sur un dispositif d'affichage (220) selon un modèle de lecture rapide, dans lequel le modèle de lecture rapide affiche un rendu numérique de texte reconnu (107) dans une fenêtre contextuelle au-dessus de l'image capturée du texte reconnu (107), dans lequel la fenêtre contextuelle se déplace vers un emplacement sur la partie du texte reconnu (107) étant affichée dans la fenêtre contextuelle tandis qu'un utilisateur lit le texte reconnu (107) et progresse dans la lecture du texte reconnu (107) ; et
déterminer (126) le moment où le texte reconnu (107) dans l'image capturée (105) a été affiché en suivant le mouvement du regard de l'utilisateur pour déterminer la progression de l'utilisateur dans la lecture du texte reconnu (107),
dans lequel le modèle de lecture rapide comporte :
- la présentation de certains mots du texte reconnu (107) en série dans une région définie sur le dispositif d'affichage (220) ; et/ou
- le fait de griser tous les mots sauf certains du texte reconnu (107) sur le dispositif d'affichage (220) de manière séquentielle ; et/ou
- l'obscurcissement partiel de tous les mots sauf certains du texte reconnu (107) sur le dispositif d'affichage (220) de manière séquentielle ; et/ou
- l'ombrage de tous les mots sauf certains du texte reconnu (107) sur le dispositif d'affichage (220) de manière séquentielle.

2. Support de stockage selon la revendication 1, dans lequel les données d'appareil photo capturées (105) comportent un texte physique à plusieurs pages comportant un journal et/ou un livre et/ou un magazine et/ou des prospectus et/ou des brochures.

3. Support de stockage selon la revendication 1, comprenant en outre des instructions pour fournir (126) un indicateur afin de capturer des données d'image supplémentaires en réponse à la détermination selon laquelle le texte reconnu (107) a été affiché, les données d'image supplémentaires comportant une image d'une page supplémentaire du texte.

4. Support de stockage selon la revendication 1, dans lequel la reconnaissance de texte comporte le fait d'effectuer une reconnaissance optique de caractères et la traduction du texte reconnu (107) dans une certaine langue.

5. Support de stockage selon la revendication 1, dans lequel le modèle de lecture rapide comporte l'agrandissement d'un certain texte sur le dispositif d'affichage (220) ; et/ou le floutage de parties du texte sur le dispositif d'affichage (220) ; et/ou la réorganisation d'un ordre de texte sur le dispositif d'affichage (220).

6. Support de stockage selon la revendication 1, dans lequel le dispositif d'affichage (220) est un téléphone intelligent et/ou un téléphone portable et/ou une tablette numérique et/ou des lunettes intelligentes et/ou un affichage monté sur casque.

7. Système (200) comprenant :
un moteur de reconnaissance de texte (212) pour reconnaître du texte dans des données d'image capturées (105) d'un support physique ; **caractérisé en ce qu'**il comprend en outre
un moteur de présentation (214) pour afficher le texte reconnu (107) selon un modèle de lecture rapide sur un dispositif d'affichage (220), dans lequel le modèle de lecture rapide affiche un rendu numérique du texte reconnu (107) dans une fenêtre contextuelle au-dessus de l'image capturée du texte reconnu (107), dans lequel la fenêtre contextuelle se déplace vers un emplacement sur la partie du texte reconnu (107) étant affichée dans la fenêtre contextuelle tandis qu'un utilisateur lit le texte reconnu (107) et progresse dans la lecture du texte reconnu (107) ;
un moteur de détermination (216) pour déterminer le moment où le texte reconnu (107) dans les données d'image capturées (105) a été affiché en suivant le mouvement du regard de l'utilisateur pour déterminer la progression de l'utilisateur dans la lecture du texte reconnu (107) ; et
un moteur d'affichage d'indicateur (218) pour afficher un indicateur afin de capturer des données d'image supplémentaires en réponse à la détermination selon laquelle le texte reconnu (107) a été affiché,
dans lequel le support physique est un support physique à plusieurs pages,
dans lequel le modèle de lecture rapide comporte :
- la présentation de certains mots du texte reconnu (107) en série dans une région définie sur le dispositif d'affichage (220) ; et/ou
- le fait de griser tous les mots sauf certains du texte reconnu (107) sur le dispositif d'affichage (220) de manière séquentielle ; et/ou
- l'obscurcissement partiel de tous les mots sauf certains du texte reconnu (107) sur le dispositif d'affichage (220) de manière séquentielle ; et/ou
- l'ombrage de tous les mots sauf certains du texte reconnu (107) sur le dispositif d'affichage (220) de manière séquentielle.

8. Système selon la revendication 7, dans lequel le modèle de lecture rapide comporte l'agrandissement d'un certain texte sur le dispositif d'affichage (220) ; et/ou le floutage de parties du texte ; et/ou la réorganisation d'un ordre de texte dans le texte reconnu (107) à afficher sur le dispositif d'affichage (220).

9. Système selon la revendication 7, dans lequel le support physique comporte un journal et/ou un livre et/ou un magazine et/ou des prospectus et/ou des brochures.

10. Système selon la revendication 7, dans lequel le dispositif d'affichage (220) est un téléphone intelligent et/ou un téléphone portable et/ou une tablette numérique, et/ou des lunettes intelligentes et/ou un affichage monté sur casque et/ou un affichage frontal.

11. Procédé (300) pour fournir un modèle de lecture rapide dans un environnement de réalité augmentée, comprenant :
la réception (302) de données d'image capturées (105) d'un objet physique contenant du texte ;
le fait d'effectuer (304) une reconnaissance optique de caractères pour reconnaître un bloc de texte dans les données d'image capturées (105) ; **caractérisé par**
la fourniture (306) d'une traduction du bloc de texte reconnu ;
l'affichage (308) du bloc de texte reconnu sur un dispositif d'affichage (220) selon un modèle de lecture rapide, dans lequel le modèle de lecture rapide affiche un rendu numérique de texte reconnu (107) dans une fenêtre contextuelle au-dessus de l'image capturée du texte reconnu (107), dans lequel la fenêtre contextuelle se déplace vers un emplacement sur la partie du texte reconnu (107) étant affichée dans la fenêtre contextuelle tandis qu'un utilisateur lit le texte reconnu (107) et progresse dans la lecture du texte reconnu (107) ;
la détermination (310) du moment où le bloc de texte reconnu a été affiché en suivant le mouvement du regard de l'utilisateur pour déterminer la progression de l'utilisateur dans la lecture du texte reconnu (107) ; et
la fourniture (312) d'un indicateur pour capturer des données d'image supplémentaires de l'objet physique contenant du texte en réponse à la détermination (310) selon laquelle le bloc de texte reconnu a été affiché,
dans lequel le modèle de lecture rapide comporte :
- la présentation de certains mots du texte reconnu (107) en série dans une région définie sur le dispositif d'affichage (220) ; et/ou
- le fait de griser tous les mots sauf certains du texte reconnu (107) sur le dispositif d'affichage (220) de manière séquentielle ; et/ou
- l'obscurcissement partiel de tous les mots sauf certains du texte reconnu (107) sur le dispositif d'affichage (220) de manière séquentielle ; et/ou
- l'ombrage de tous les mots sauf certains du texte reconnu (107) sur le dispositif d'affichage (220) de manière séquentielle.

12. Procédé selon la revendication 11, dans lequel les données d'image supplémentaires de l'objet physique contenant du texte comportent des liens vers des informations supplémentaires concernant le texte reconnu (107).

13. Procédé selon la revendication 12, dans lequel les informations supplémentaires comportent des données vidéo, des données d'image et des données de texte.
